# DEMANDE DE BREVET EUROPEEN

(11) **EP 4 640 444 A1**
(43) Date de publication de la demande: **29.10.2025**
(21) Numéro de dépôt: 25161051.5
(22) Date de dépôt: 28.02.2025
(51) Int. Cl.: B60B 7/06, B60B 7/12, B60B 7/02

(54) **ENJOLIVEUR POUR ÊTRE FIXÉ À UNE ROUE**

(30) Priorité: 24.04.2024 FR 2404240
(71) Demandeur: Stellantis Auto SAS, 78300 Poissy (FR)
(72) Inventeur: AFRIAD, IDRISS, 20200 CASABLANCA (MA); TLEMCANI, MOAD, 20250 CASABLANCA (MA); LAKHAL, HASNAA, 20200 CASABLANCA (MA)
(74) Mandataire: BCIP

(57) **Abrégé**

L'invention concerne un enjoliveur pour être fixé à une roue, ayant une surface tournée radialement vers l'intérieur dite « surface en regard », s'étendant sensiblement axialement, comportant un corps comprenant une partie de montage disposée en alignement axial avec ladite surface de regard de la roue (20) et à l'écart radialement vers l'intérieur de ladite surface ; et un fil de rétention (22) porté par ladite partie de montage, ledit fil de rétention (22) ayant une projection s'étendant radialement vers l'extérieur. La projection étant coupée et laissant deux extrémités orientées radialement vers l'intérieur de la roue (20) dans un plan parallèle au plan longitudinal maintenues à une distance prédéterminée, lorsque la distance est en dessous de la distance prédéterminée, le fil de rétention (22) libère la partie de montage reliée à la roue (20) et l'enjoliveur (21) se désolidarise à la roue (20).

## Description

### Domaine technique de l'invention

La présente invention concerne un enjoliveur conçu pour être fixé à une roue.

### Technique antérieure

Les enjoliveurs sont des éléments décoratifs qui recouvrent les roues d'une voiture.

Les enjoliveurs de roue sont souvent fixés à la roue à l'aide de clips ou de crochets métalliques. Bien que ces dispositifs de fixation aient été largement utilisés, ils présentent certains inconvénients. Par exemple, les clips métalliques peuvent être sujets à la corrosion, ce qui rend difficile leur retrait après une exposition prolongée aux éléments naturels. De plus, ces clips peuvent parfois se détacher accidentellement lors de la conduite, ce qui entraîne la perte de l'enjoliveur.

Le démontage d'un enjoliveur peut être nécessaire pour différentes raisons : il faut retirer l'enjoliveur pour accéder à la roue et la changer. Les enjoliveurs peuvent se salir et il faut les retirer pour les nettoyer correctement. En cas de dommage sur l'enjoliveur, il faut le retirer pour le réparer ou le remplacer.

Le démontage d'un enjoliveur peut s'avérer difficile pour plusieurs raisons. Le système de clips peut être résistant et il faut parfois y aller avec force pour retirer l'enjoliveur. La corrosion peut souder l'enjoliveur à la jante, ce qui rend son retrait encore plus difficile. Si l'enjoliveur est déformé, il peut se coincer dans la jante et être difficile à retirer.

Certains dispositifs de fixation antérieurs utilisent également des vis ou des écrous pour fixer les enjoliveurs. Bien que ces méthodes puissent offrir une meilleure sécurité, elles peuvent également être plus difficiles à installer et à retirer, nécessitant souvent l'utilisation d'outils spéciaux.

### Présentation de l'invention

La présente invention vise à remédier à ces inconvénients avec une approche totalement novatrice.

Plus précisément, l'invention a pour objectif de fournir une fixation améliorée qui vise à résoudre les problèmes susmentionnés en fournissant un moyen de fixation sécurisé, facile à installer et à retirer.

Ces objectifs, ainsi que d'autres qui apparaîtront par la suite, sont atteints, selon un premier aspect, à l'aide d'un enjoliveur pour être fixé à une roue, ayant une surface tournée radialement vers l'intérieur dite « surface en regard », s'étendant sensiblement axialement, comportant un corps comprenant une partie de montage disposée en alignement axial avec ladite surface de regard de la roue et à l'écart radialement vers l'intérieur de ladite surface ; et un fil de rétention porté par ladite partie de montage, ledit fil de rétention ayant une projection s'étendant radialement vers l'extérieur, remarquable en ce que la projection étant coupée et laissant deux extrémités orientées radialement vers l'intérieure de la roue dans un plan parallèle au plan longitudinal maintenues à une distance prédéterminée, lorsque la distance est en dessous de la distance prédéterminée, le fil de rétention libère la partie de montage reliée à la roue et l'enjoliveur se désolidarise à la roue.

Grâce à ces dispositions, l'agencement du fil de rétention permet de maintenir en position l'enjoliveur tout en permettant de le libérer facilement par un outil.

L'invention est avantageusement mise en œuvre selon les modes de réalisation et les variantes exposées ci-après, lesquelles sont à considérer individuellement ou selon toute combinaison techniquement opérante.

Dans un mode de réalisation, chaque extrémité orientée radialement vers l'intérieur de projection est comprise en 0,5 et 1,5 cm.

Dans un mode de réalisation, la partie de montage comprend des ouvertures circonstanciellement espacées et radicalement alignées à des positions qui correspondent auxdites projections.

Dans un mode de réalisation, chaque extrémité orientée radialement vers l'intérieur de projection comporte un trou traversant.

Dans un mode de réalisation, chaque trou traversant est configuré pour fonctionner avec une pince Circlips (marque déposée) dont les extrémités sont rondes et correspondent au trou traversant.

Dans un mode de réalisation, des moyens anti-rotation pour résister à un déplacement circonférentiel relatif entre ledit enjoliveur et ladite roue.

Dans un mode de réalisation, ladite partie de montage comporte des clips de rétention du fil de rétention.

Dans un mode de réalisation, le diamètre du fil de rétention est compris entre 0,4 et 1,5 mm.

Dans un mode de réalisation, la distance prédéterminée est comprise entre 0,5 et 4 cm.

Dans un mode de réalisation, ladite partie de montage comporte au moins une patte bloquant le corps de l'enjoliveur sur la roue.

### Brève description des figures

D'autres avantages, buts et caractéristiques de la présente invention ressortent de la description qui suit faite, dans un but explicatif et nullement limitatif, en regard des dessins annexés, dans lesquels :
La figure 1 représente un enjoliveur sur une roue selon un exemple de réalisation d'invention ;
La figure 2 représente une vue en perspective d'un enjoliveur selon l'art antérieur ;
La figure 3 représente une vue en perspective d'un enjoliveur selon un exemple de réalisation d'invention ;
La figure 4 représente une vue en coupe transversale de la figure 1 avec une vue zoomée ;
La figure 5 représente quatre vues comparatives de l'art antérieur avec la présente invention ;
La figure 6 représente l'action d'une pince avec le fil de rétention de l'enjoliveur.

### Description des modes de réalisation

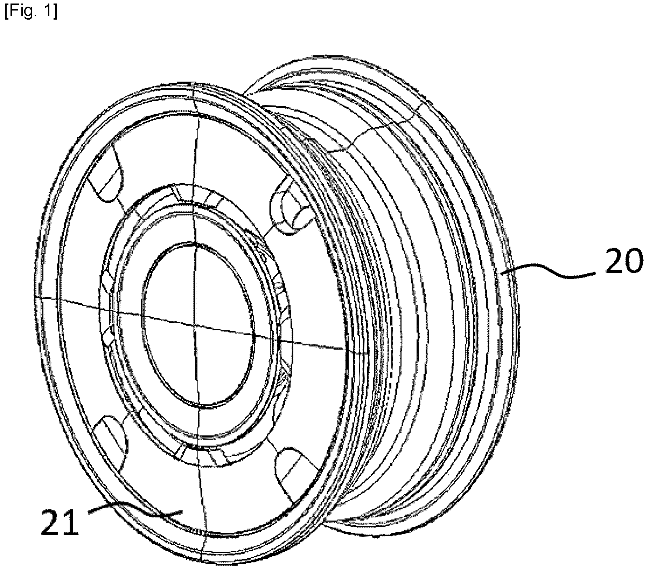

La figure 1 montre un enjoliveur 21 sur une roue 20 selon un exemple de réalisation d'invention.

Un enjoliveur 21 de roue, également connu sous le nom de cache-moyeu ou de couvercle de roue, est une pièce généralement en plastique ou en métal qui recouvre le moyeu central et les écrous de fixation d'une roue 20 de voiture.

Les enjoliveurs 21 de roue sont souvent fabriqués en plastique ABS (acronyme pour acrylonitrile butadiène styrène) ou en métal léger comme l'aluminium ou l'acier inoxydable. Ces matériaux sont choisis pour leur légèreté, leur durabilité et leur capacité à résister aux intempéries.

Un enjoliveur 21 de roue est généralement de forme circulaire pour s'adapter à la roue 20, avec un trou central pour permettre le passage du moyeu. Sa taille correspond à celle de la jante, recouvrant la totalité ou une partie de la surface de la roue 20.

Les enjoliveurs 21 de roue sont disponibles dans une variété de designs et de finitions pour correspondre au style de la voiture et aux préférences du propriétaire. Certains enjoliveurs 21 ont des motifs géométriques, des logos de marque ou des finitions chromées, tandis que d'autres peuvent être plus simples et discrets.

Pour maintenir l'enjoliveur 21 en place, il est généralement équipé de clips, avec un fil de rétention 22.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

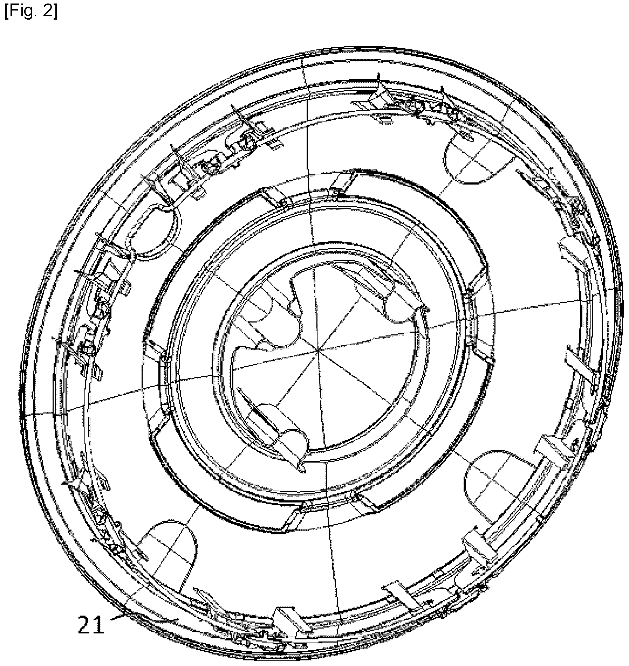

La figure 2 montre une vue en perspective d'un enjoliveur 21 selon l'art antérieur.

Cette figure montre l'arrière de l'enjoliveur 21 avec un système de fil de rétention 22.

Il s'agit d'un mécanisme simple mais efficace permettant de verrouiller l'enjoliveur 21 sur la roue 20.

Le fil de rétention 22 est généralement constitué d'un fil métallique flexible, résistant à la corrosion.

Il est fixé à la périphérie de l'enjoliveur 21 et se termine par un dispositif de blocage ou de libération.

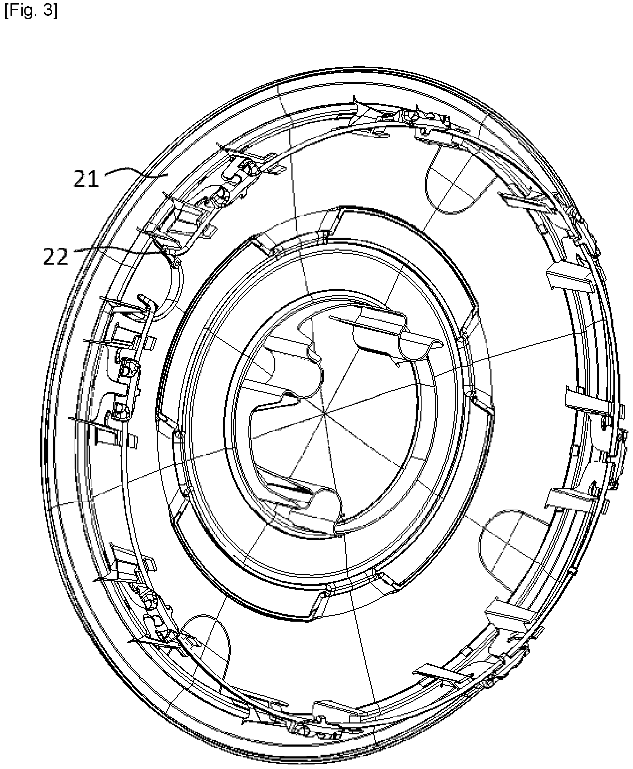

La figure 3 montre une vue en perspective d'un enjoliveur 21 selon un exemple de réalisation d'invention.

L'enjoliveur représenté a une surface tournée radialement vers l'intérieur dite « surface en regard ». L'enjoliveur comporte un corps comprenant une partie de montage disposée en alignement axial avec ladite surface de regard de la roue 20 et à l'écart radialement vers l'intérieur de ladite surface.

Un fil de rétention 22 est porté par ladite partie de montage.

Le fil de rétention 22 a une projection s'étendant radialement vers l'extérieur. La projection est coupée et laisse deux extrémités orientées radialement vers l'intérieur de la roue 20 dans un plan parallèle au plan longitudinal maintenues à une distance prédéterminée.

Lorsque la distance est en dessous de la distance prédéterminée, le fil de rétention 22 libère la partie de montage reliée à la roue 20 et l'enjoliveur 21 se désolidarise de la roue 20.

Le fil de rétention 22 offre une méthode de fixation rapide, sécurisée et sans outil pour l'enjoliveur 21 de roue.

Le fil de rétention 22 est élastique est permet d'avoir une force constante lors de la mise en place pour assurer le maintien de l'enjoliveur 21 sur la roue 20.

Il réduit le risque de perte accidentelle de l'enjoliveur 21 pendant la conduite, assurant ainsi une apparence esthétique constante.

L'utilisation du fil de rétention 22 simplifie le processus de montage et de démontage de l'enjoliveur 21, ce qui peut être effectué facilement par tout utilisateur, même sans expérience préalable.

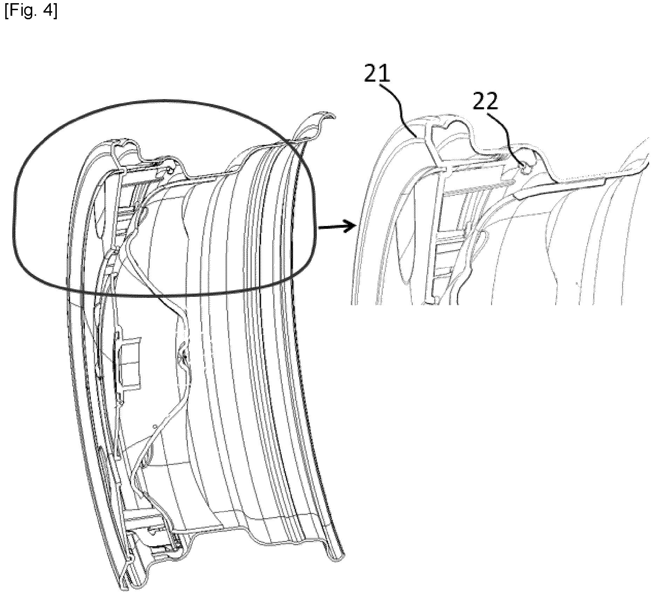

La figure 4 montre une vue en coupe transversale de la figure 1 avec une vue zoomée.

Cette figure reprend les éléments décrits ci-avant.

Elle montre la patte de fixation de l'enjoliveur 21 sur la roue 20. Le fil de rétention 22 retient la patte.

Le fil de rétention 22 exerce une force de sur la patte qui est bloquée dans cette position.

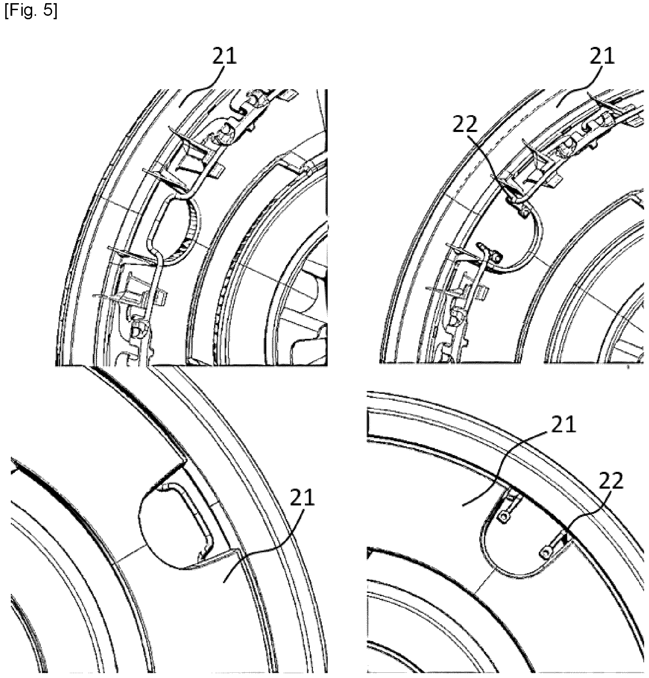

La figure 5 montre quatre vues comparatives de l'art antérieur avec la présente invention.

Cette figure montre la différence entre l'art antérieur et la présente invention.

Les extrémités du fil de rétention 22 comportent chacune un trou traversant pour fonctionner avec la pince montrée à la figure suivante.

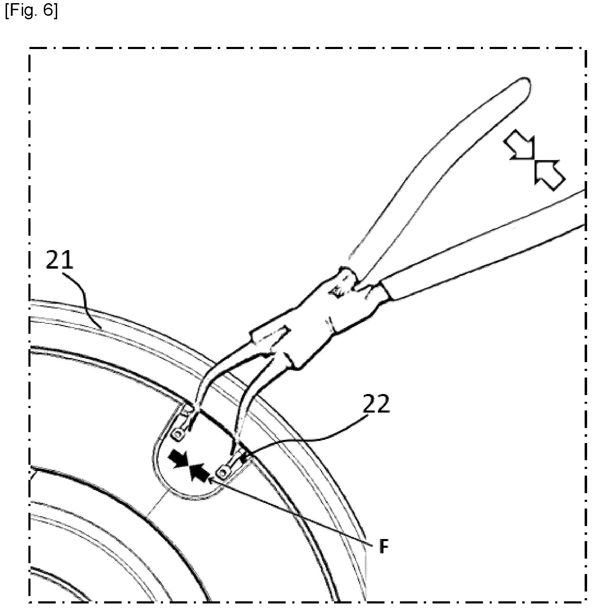

La figure 6 montre l'action d'une pince avec le fil de rétention 22 de l'enjoliveur 21.

Pour installer l'enjoliveur 21, l'utilisateur aligne simplement les encoches de l'enjoliveur 21 aux fentes correspondantes sur la roue 20.

En poussant fermement l'enjoliveur 21 contre la roue 20, le fil de rétention 22 se bloque automatiquement en place par des pattes, assurant ainsi une fixation sécurisée.

Pour retirer l'enjoliveur 21, l'utilisateur utilise un outil fourni de pince visible pour actionner le dispositif de libération du fil de rétention 22. La flèche F montre le sens de l'effort de la pince.

En relâchant le fil de rétention 22, l'enjoliveur 21 peut être retiré sans effort, facilitant ainsi l'accès aux composants de la roue 20 pour l'entretien ou le remplacement.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Enjoliveur pour être fixé à une roue, ayant une surface tournée radialement vers l'intérieur dite « surface en regard », s'étendant sensiblement axialement, comportant un corps comprenant une partie de montage disposée en alignement axial avec ladite surface de regard de la roue (20) et à l'écart radialement vers l'intérieur de ladite surface ; et un fil de rétention (22) porté par ladite partie de montage, ledit fil de rétention (22) ayant une projection s'étendant radialement vers l'extérieur, **caractérisé en ce que** la projection étant coupée et laissant deux extrémités orientées radialement vers l'intérieure de la roue (20) dans un plan parallèle au plan longitudinal maintenues à une distance prédéterminée, lorsque la distance est en dessous de la distance prédéterminée, le fil de rétention (22) libère la partie de montage reliée à la roue (20) et l'enjoliveur (21) se désolidarise à la roue (20).

2. Enjoliveur selon la revendication 1, dans lequel chaque extrémité orientée radialement vers l'intérieur de projection est comprise en 0,5 et 1,5 cm.

3. Enjoliveur selon l'une des revendications 1 à 2, dans lequel la partie de montage comprend des ouvertures circonstanciellement espacées et radicalement alignées à des positions qui correspondent auxdites projections.

4. Enjoliveur selon l'une des revendications 1 à 3, dans lequel chaque extrémité orientée radialement vers l'intérieur de projection comporte un trou traversant.

5. Enjoliveur selon la revendication 4, dans lequel chaque trou traversant est configuré pour fonctionner avec une pince Circlips (marque déposée) dont les extrémités sont rondes et correspondent au trou traversant.

6. Enjoliveur selon l'une des revendications 1 à 5, dans lequel des moyens anti-rotation pour résister à un déplacement circonférentiel relatif entre ledit enjoliveur (21) et ladite roue (20).

7. Enjoliveur selon l'une des revendications 1 à 6, dans lequel ladite partie de montage comporte des clips de rétention du fil de rétention (22).

8. Enjoliveur selon l'une des revendications 1 à 7, dans lequel le diamètre du fil de rétention (22) est compris entre 0,4 et 1,5 mm.

9. Enjoliveur selon l'une des revendications 1 à 8, dans lequel la distance prédéterminée est comprise entre 0,5 et 4 cm.

10. Enjoliveur selon l'une des revendications 1 à 9, dans lequel ladite partie de montage comporte au moins une patte bloquant le corps de l'enjoliveur (21) sur la roue (20).
